# DEMANDE DE BREVET EUROPEEN

(11) **EP 4 043 537 A1**
(43) Date de publication de la demande: **17.08.2022**
(21) Numéro de dépôt: 22154874.6
(22) Date de dépôt: 03.02.2022
(51) Int. Cl.: C10G 2/00, B01J 23/75, B01J 37/02, B01J 23/755

(54) **PROCEDE DE PREPARATION D'UN CATALYSEUR DE FISCHER-TROPSCH EN PRESENCE D'UN ADDITIF ET D'UNE ETAPE DE CALCINATION SPECIFIQUE**

(30) Priorité: 11.02.2021 FR 2101299
(71) Demandeur: IFP Energies nouvelles, 92500 Rueil-Malmaison (FR)
(72) Inventeur: DELCROIX, Damien, 92852 RUEIL-MALMAISON CEDEX (FR); CHENEVIER, Romain, 92852 RUEIL-MALMAISON CEDEX (FR)
(74) Mandataire: IFP Energies nouvelles

(57) **Abrégé**

Procédé de préparation d'un catalyseur contenant une phase active à base d'un métal du groupe VIII et un support poreux comprenant les étapes suivantes :
- mise en contact dudit support avec un composé organique comportant au moins de l'oxygène et/ou de l'azote ;
- mise en contact du support poreux avec une solution contenant un précurseur de la phase active comprenant un métal du groupe VIII ;
- séchage du précurseur de catalyseur à une température inférieure à 200°C pour obtenir un précurseur de catalyseur séché ;
- calcination du précurseur de catalyseur séché à une température comprise entre 200°C et 1100°C sous flux de gaz inerte et/ou de gaz oxydant, étant entendue que la vitesse dudit flux gazeux, définie comme le débit massique dudit flux gazeux par volume de catalyseur par heure, est supérieure à 1 litre par gramme de catalyseur et par heure.

## Description

### Domaine technique

La présente invention concerne le domaine des réactions de synthèse d'hydrocarbures à partir d'un mélange de gaz comprenant du monoxyde de carbone et de l'hydrogène, généralement appelée synthèse Fischer-Tropsch. Plus particulièrement, la présente invention concerne le domaine de la préparation de catalyseurs utilisés dans les synthèses Fischer-Tropsch.

### Etat de la technique

Les procédés de synthèse Fischer-Tropsch permettent d'obtenir une large gamme de coupes hydrocarbonées à partir du mélange CO + H₂, communément appelé gaz de synthèse. L'équation globale de la synthèse Fischer-Tropsch peut s'écrire de la manière suivante :

n CO + (2n+1)H₂ → CₙH₂ₙ₊₂ + n H₂O

La synthèse Fischer-Tropsch est au cœur des procédés de conversion du gaz naturel, du charbon ou de la biomasse en carburants ou en intermédiaires pour l'industrie chimique. Ces procédés sont appelés GTL (« *Gas to Liquids* » selon la terminologie anglo-saxonne) dans le cas de l'utilisation de gaz naturel comme charge initiale, CTL *(*« *Coal to Liquids* » selon la terminologie anglo-saxonne) pour le charbon, et BTL (« *Biomass to Liquids* » selon la terminologie anglo-saxonne) pour la biomasse.

Dans chacun de ces cas, la charge initiale est tout d'abord gazéifiée en un gaz de synthèse qui comprend un mélange de monoxyde de carbone et de dihydrogène. Le gaz de synthèse est ensuite transformé majoritairement en paraffines grâce à la synthèse Fischer-Tropsch, et ces paraffines peuvent ensuite être transformées en carburants par un procédé d'hydroisomérisation-hydrocraquage. Par exemple, des procédés de transformation tels que l'hydrocraquage, le déparaffinage, et l'hydroisomérisation des coupes lourdes (C16+) permettent de produire différents types de carburants dans la gamme des distillats moyens: gazole (coupe 180-370°C) et kérosène (coupe 140-300°C). Les fractions plus légères C5-C15 peuvent être distillées et utilisées comme solvants.

La réaction de synthèse Fischer-Tropsch peut être réalisée dans différents types de réacteurs (lit fixe, mobile, ou triphasique (gaz, liquide, solide) par exemple de type autoclave parfaitement agité, ou colonne à bulles), et les produits de la réaction présentent notamment la caractéristique d'être exempts de composés soufrés, azotés ou de type aromatique.

Dans une mise en œuvre dans un réacteur de type colonne à bulles (ou *"slurry bubble column"* selon la terminologie anglaise, ou encore *"slurry"* dans une expression simplifiée), qui met en œuvre un catalyseur divisé à l'état de poudre très fines, typiquement de l'ordre de quelques dizaines de micromètres, cette poudre formant une suspension avec le milieu réactionnel.

La réaction Fischer-Tropsch se déroule de manière classique entre 1 et 4 MPa (10 et 40 bars), à des températures comprises traditionnellement entre 200°C et 350°C. La réaction est globalement exothermique, ce qui nécessite une attention particulière à la mise en œuvre du catalyseur.

Les catalyseurs utilisés en synthèse Fischer-Tropsch sont le plus souvent des catalyseurs supportés à base d'alumine, de silice ou de silice-alumine ou de combinaisons de ces supports, la phase active étant principalement constituée de fer (Fe) ou de cobalt (Co) éventuellement dopée par un métal noble tel que le Pt, le Rh ou le Ru.

L'ajout d'un composé organique sur les catalyseurs Fischer-Tropsch pour améliorer leur activité a été préconisé par l'Homme du métier.

De nombreux documents décrivent l'utilisation de différentes gammes de composés organiques en tant qu'additifs, tels que des composés organiques contenant de l'azote et/ou des composés organiques contenant de l'oxygène.

En particulier, les brevets US 5,856,260 et US 5,856,261 enseignent respectivement l'introduction, lors de la préparation du catalyseur, de polyols de formule générale CnH₂ₙ₊₂Oₓ avec n un nombre entier compris entre 2 et environ 6, et x un entier compris entre 2 et 11 ou de sucres de type mono- ou disaccharides, le sucrose étant particulièrement préféré.

La demande de brevet US 2005/0026776 enseigne l'utilisation de composés chélatants de type acide nitrilotriacétique (NTA), acide trans-1,2-cyclohexadiamine-N,N,N',N' tétraacétique (CyDTA) ou acide éthylènediaminetétraacétique (EDTA), ou encore de glycine, d'acide aspartique ou d'acide citrique pour l'obtention d'un catalyseur à taille réduite de cristallites Co₃O₄. D'autres documents enseignent l'utilisation de polyéthers (WO2014/092278 et WO2015/183061), d'acide glyoxylique (WO2015/183059), d'acides dicarboxyliques insaturés (US2011/0028575) ou encore d'acides carboxyliques multifonctionnels de formule HOOC-(CRR¹)ₙ-COOH avec n≥ 1 dans la préparation de catalyseurs Fischer-Tropsch (WO98/47618).

La demande de brevet US2014/0353213 décrit l'utilisation de lactames ou d'esters cycliques de type lactone contenant un atome d'oxygène dans le cycle (β-propiolactone, γ-butyrolactone, δ-valerolactone) ou plusieurs atomes d'oxygène dans le cycle (carbonate de propylène) pour augmenter l'activité d'un catalyseur de type CoMo ou NiMo utilisé en hydrodésulfuration d'une coupe diesel.

Le document WO2012/013866 divulgue l'utilisation d'un oligosaccharide cyclique, notamment de la cyclodextrine, comme additif d'un catalyseur Fischer-Tropsch. Ce document décrit aussi l'utilisation d'un support à base de silice-alumine contenant optionnellement une spinelle.

Enfin, le document FR3050659 divulgue un catalyseur contenant une phase active de cobalt, déposée sur un support comprenant de l'alumine, de la silice ou de la silice-alumine, ledit support contenant une phase d'oxyde mixte contenant du cobalt et/ou du nickel, ledit catalyseur ayant été préparé en introduisant au moins un composé organique comportant au moins une fonction ester lors de sa préparation.

Poursuivant ses recherches dans l'amélioration des performances des catalyseurs dans le domaine de la synthèse de Fischer-Tropsch, la Demanderesse a découvert de manière surprenante que le recours à une étape de calcination spécifique après l'ajout de la phase active et du composé organique (additif) sur le support permet d'augmenter de manière significative l'activité catalytique du catalyseur tout en conservant une bonne sélectivité. Quand bien même l'étape de calcination du précurseur de catalyseur engendre la décomposition au moins en partie, voire totale, du composé organique présent sur le support du catalyseur, ce dernier a laissé une empreinte sur le catalyseur.

### Objets de l'invention

La présente invention a pour objet un procédé de préparation d'un catalyseur contenant une phase active à base d'au moins un métal du groupe VIII et un support poreux à base d'alumine, de silice, ou de silice-alumine, ledit catalyseur étant préparé par au moins les étapes suivantes :
a) une étape de mise en contact dudit support avec au moins un composé organique comportant au moins de l'oxygène et/ou de l'azote ;
b) une étape de mise en contact dudit support poreux avec au moins une solution contenant au moins un précurseur de la phase active comprenant au moins un métal du groupe VIII, les étapes a) et b) pouvant être réalisées séparément, dans un ordre indifférent, ou simultanément,
c) une étape de séchage du précurseur de catalyseur obtenu à l'issue de l'enchaînement des étapes a) et/ou b) à une température inférieure à 200°C pour obtenir un précurseur de catalyseur séché ;
d) une étape de calcination du précurseur de catalyseur séché obtenu à l'issue de l'étape c) à une température comprise entre 200°C et 1100°C sous flux de gaz inerte et/ou de gaz oxydant, étant entendue que la vitesse dudit flux gazeux, définie comme le débit volumique dudit flux gazeux par masse de catalyseur par heure, est supérieure à 1 litre par gramme de catalyseur et par heure.

Avantageusement, la vitesse du flux gazeux à l'étape d) est comprise entre 1,5 et 5 litres par gramme de catalyseur et par heure.

Avantageusement, l'étape a) est réalisée avant l'étape b).

Selon un ou plusieurs modes de réalisation, ledit composé organique est choisi parmi un composé comportant une ou plusieurs fonctions chimiques choisies parmi une fonction carboxylique, alcool, ester, amine, amide, éther, dilactone, carboxyanhydride, aldéhyde, cétone, nitrile, imide, oxime, urée.

Selon un ou plusieurs modes de réalisation, ledit composé organique comporte au moins une fonction carboxylique choisi parmi l'acide éthanedioïque (acide oxalique), l'acide propanedioïque (acide malonique), l'acide butanedioïque (acide succinique), l'acide 4-oxopentanoïque (acide lévulinique) et l'acide 3-carboxy-3-hydroxypentanedioïque (acide citrique).

Selon un ou plusieurs modes de réalisation, ledit composé organique comporte au moins une fonction alcool choisi parmi le méthanol, l'éthanol, le phénol, l'éthylène glycol, le propane-1,3-diol, le glycérol, le sorbitol, le diéthylène glycol, les polyéthylène glycol ayant une masse molaire moyenne inférieure à 600 g/mol, le glucose, le fructose et le sucrose sous l'une quelconque de leurs formes isomères.

Selon un ou plusieurs modes de réalisation, ledit composé organique comporte au moins une fonction ester choisi parmi une γ-lactone ou une δ-lactone contenant entre 4 et 8 atomes de carbone, la γ-butyrolactone, la γ-valérolactone, le laurate de méthyle, le malonate de diméthyle, le succinate de diméthyle et le carbonate de propylène.

Selon un ou plusieurs modes de réalisation, ledit composé organique comporte au moins une fonction amine choisi parmi l'aniline, l'éthylènediamine, le diaminohexane, la tétraméthylènediamine, l'hexaméthylènediamine, la tétraméthyléthylènediamine, la tétraéthyléthylènediamine, la diéthylènetriamine et la triéthylènetétramine.

Selon un ou plusieurs modes de réalisation, ledit composé organique comporte au moins une fonction amide choisi parmi la formamide, la N-méthylformamide, la N,N-diméthylformamide, la 2-pyrrolidone, la N-méthyl-2-pyrrolidone, la gamma-valérolactame et la N,N'-diméthylurée.

Selon un ou plusieurs modes de réalisation, ledit composé organique comporte au moins une fonction carboxyanhydride choisi dans le groupe des O-carboxyanhydrides constitué par la 5-méthyl-1,3-dioxolane-2,4-dione et l'acide 2,5-dioxo-1,3-dioxolane-4-propanoïque, ou dans le groupe des N-carboxyanhydrides constitué par la 2,5-oxazolidinedione et la 3,4-diméthyl-2,5-oxazolidinedione.

Selon un ou plusieurs modes de réalisation, ledit composé organique comporte au moins une fonction dilactone choisi dans le groupe des dilactones cycliques de 4 chaînons constitué par la 1,2-dioxétanedione, ou dans le groupe des dilactones cycliques de 5 chaînons constitué par la 1,3-dioxolane-4,5-dione, la 1,5-dioxolane-2,4-dione, et la 2,2-dibutyl-1,5-dioxolane-2,4-dione, ou dans le groupe des dilactones cycliques de 6 chaînons constitué par la 1,3-dioxane-4,6-dione, la 2,2-diméthyl-1,3-dioxane-4,6-dione, la 2,2,5-triméthyl-1,3-dioxane-4,6-dione, la 1,4-dioxane-2,5-dione, la 3,6-diméthyl-1,4-dioxane-2,5-dione, la 3,6-diisopropyl-1,4-dioxane-2,5-dione, et la 3,3-ditoluyl-6,6-diphényl-1,4-dioxane-2,5-dione, ou dans le groupe des dilactones cycliques de 7 chaînons constitué par la 1,2-dioxépane-3,7-dione, la 1,4-dioxépane-5,7-dione, la 1,3-dioxépane-4,7-dione et la 5-hydroxy-2,2-diméthyl-1,3-dioxépane-4,7-dione.

Selon un ou plusieurs modes de réalisation, ledit composé organique comporte au moins une fonction éther comportant au maximum deux fonctions éthers, et ne comportant pas de groupe hydroxyle, choisi dans le groupe des éthers linéaires constitué par le diéthyl éther, le dipropyl éther, le dibutyl éther, le methyl tert-butyl éther, le diisopropyl éther, le di-tert-butyl éther, le méthoxybenzène, le phényl vinyl éther, l'isopropyl vinyl éther et l'isobutyl vinyl éther, ou dans le groupe des éthers cycliques constitué par le tétrahydrofurane, 1,4-dioxane et la morpholine.

Selon un ou plusieurs modes de réalisation, le rapport molaire de composé organique introduit lors de l'étape a) par rapport à l'élément de métal du groupe VIII introduit à l'étape b) est compris entre 0,01 et 2,0 mol/mol.

Selon un ou plusieurs modes de réalisation, la teneur en métal du groupe VIII introduit lors de l'étape b) est comprise entre 1 et 60 % poids exprimé en élément métallique du groupe VIII par rapport au poids total du catalyseur.

Selon un ou plusieurs modes de réalisation, le métal du groupe VIII est le cobalt.

Selon un ou plusieurs modes de réalisation, ledit procédé comprend une étape a0) dans laquelle on met en contact ledit support poreux avec au moins une solution contenant au moins un précurseur de cobalt et/ou de nickel, puis on sèche et on calcine à une température entre 700°C et 1200°C, de manière à obtenir une phase d'oxyde mixte contenant du cobalt et/ou du nickel dans le support.

Selon un ou plusieurs modes de réalisation, la teneur de la phase d'oxyde mixte dans le support est comprise entre 0,1 et 50% en poids par rapport au poids total du support.

Selon un ou plusieurs modes de réalisation, la teneur en silice dudit support est comprise entre 0,5% poids à 30% poids par rapport au poids du support avant la formation de la phase d'oxyde mixte lorsque le support est une silice-alumine.

Un autre aspect de l'invention concerne un procédé Fischer-Tropsch de synthèse d'hydrocarbures comprenant la mise en contact d'une charge comprenant du gaz de synthèse avec au moins un catalyseur obtenu par le procédé de préparation selon l'invention sous une pression totale comprise entre 0,1 et 15 MPa, sous une température comprise entre 150°C et 350°C, et à une vitesse volumique horaire comprise entre 100 et 20000 volumes de gaz de synthèse par volume de catalyseur et par heure avec un rapport molaire H₂/CO du gaz de synthèse entre 0,5 et 4.

### Description détaillée de l'invention

### Définitions

Dans la description suivante, les groupes d'éléments chimiques sont donnés selon la classification CAS (CRC Handbook of Chemistry and Physics, éditeur CRC press, rédacteur en chef D.R. Lide, 81ème édition, 2000-2001). Par exemple, le groupe VIIIB selon la classification CAS correspond aux métaux des colonnes 8, 9 et 10 selon la nouvelle classification IUPAC.

Les propriétés texturales et structurales du support et du catalyseur décrits ci-après sont déterminées par les méthodes de caractérisation connues de l'homme du métier. Le volume poreux total et la distribution poreuse sont déterminés dans la présente invention par porosimétrie au mercure (cf. Rouquerol F.; Rouquerol J.; Singh K. « Adsorption by Powders & Porous Solids: Principle, methodology and applications », Academic Press, 1999). Plus particulièrement, le volume poreux total est mesuré par porosimétrie au mercure selon la norme ASTM D4284-92 avec un angle de mouillage de 140°, par exemple au moyen d'un appareil modèle Autopore III^{™} de la marque Micromeritics^{™}. La surface spécifique est déterminée dans la présente invention par la méthode B.E.T, méthode décrite dans le même ouvrage de référence que la porosimétrie au mercure, et plus particulièrement selon la norme ASTM D3663-03.

Les teneurs en métal du groupe VIII sont mesurées par fluorescence X.

### Procédé de préparation du catalyseur

Un premier objet selon l'invention concerne un procédé de préparation d'un catalyseur contenant une phase active à base d'au moins un métal du groupe VIII et un support poreux à base d'alumine, de silice, ou de silice-alumine, ledit catalyseur étant préparé par au moins les étapes suivantes :
a) on met en contact dudit support avec au moins un composé organique comportant au moins de l'oxygène et/ou de l'azote ;
b) on met en contact dudit support poreux avec au moins une solution contenant au moins un précurseur de la phase active comprenant au moins un métal du groupe VIII,
   les étapes a) et b) pouvant être réalisées séparément, dans un ordre indifférent, ou simultanément,
c) on sèche le précurseur de catalyseur obtenu à l'issue de l'enchaînement des étapes a) et/ou b) à une température inférieure ou égale à 200°C pour obtenir un précurseur de catalyseur séché ;
d) on calcine le précurseur de catalyseur séché obtenu à l'issue de l'étape c) à une température supérieure à 200°C et inférieure ou égale à 1100°C sous flux de gaz inerte et/ou de gaz oxydant, étant entendue que la vitesse dudit flux gazeux, définie comme le débit massique dudit flux gazeux par volume de catalyseur par heure, est supérieure à 1 litre par gramme de catalyseur et par heure.

Les étapes du procédé de préparation du catalyseur utilisé dans la synthèse Fischer-Tropsch selon l'invention sont décrites en détail ci-après.

### Etape a0) Formation de la phase d'oxyde mixte contenant du cobalt et/ou du nickel (optionnelle)

Dans un mode de réalisation selon l'invention, le procédé de préparation comprend en outre une étape de formation de la phase s'oxyde mixte contenant du cobalt et/ou du nickel dans le support comprenant de l'alumine, de la silice ou de la silice-alumine par la mise en contact d'une solution contenant au moins un précurseur de cobalt et/ou de nickel, suivie d'un séchage et d'une calcination à haute température.

Il est connu que la présence d'une phase d'oxyde mixte contenant du cobalt et/ou du nickel dans un support de type alumine, silice ou silice-alumine permet d'améliorer la résistance au phénomène d'attrition chimique et mécanique dans un procédé Fischer-Tropsch, et donc de stabiliser le support.

La formation de la phase d'oxyde mixte dans le support, souvent appelé étape de stabilisation du support, peut être effectuée par toute méthode connue de l'Homme du métier. Elle est généralement effectuée en introduisant le cobalt et/ou le nickel sous forme d'un précurseur de sel par exemple de type nitrate sur le support initial contenant l'alumine, la silice ou la silice-alumine. Par calcination à très haute température, la phase d'oxyde mixte contenant du cobalt et/ou du nickel, est formée et stabilise l'ensemble du support. Le cobalt et/ou le nickel contenu dans la phase d'oxyde mixte n'est pas réductible lors de l'activation finale du catalyseur Fischer-Tropsch (réduction). Le cobalt et/ou le nickel contenu dans la phase d'oxyde mixte ne constitue donc pas la phase active du catalyseur.

Selon l'étape a0) on effectue une étape de mise en contact d'un support comprenant de l'alumine, de la silice ou de la silice-alumine avec au moins une solution contenant au moins un précurseur de cobalt et/ou de nickel, puis on sèche et on calcine à une température entre 700 et 1200°C, de manière à obtenir une phase d'oxyde mixte contenant du cobalt et/ou du nickel dans le support.

Plus particulièrement, l'étape a0) de mise en contact peut être effectuée par imprégnation, de préférence à sec, d'un support comprenant de l'alumine, de la silice ou de la silice-alumine, préformé ou en poudre, avec au moins une solution aqueuse contenant le précurseur de cobalt et/ou de nickel, suivie d'un séchage et d'une calcination à une température comprise entre 700 et 1200°C.

Le cobalt est mis au contact du support par l'intermédiaire de tout précurseur de cobalt soluble en phase aqueuse. De manière préférée, le précurseur de cobalt est introduit en solution aqueuse, de préférence sous forme de nitrate, de carbonate, d'acétate, de chlorure, de complexes formés avec les acétylacétonates, ou de tout autre dérivé inorganique soluble en solution aqueuse, laquelle est mise en contact avec ledit support. Le précurseur de cobalt avantageusement utilisé est le nitrate de cobalt ou l'acétate de cobalt.

Le nickel est mis au contact du support par l'intermédiaire de tout précurseur de nickel soluble en phase aqueuse. De manière préférée, ledit précurseur de nickel est introduit en solution aqueuse, par exemple sous forme de nitrate, de carbonate, d'acétate, de chlorure, d'hydroxyde, d'hydroxycarbonate, d'oxalate, de complexes formés avec les acétylacétonates, ou de tout autre dérivé inorganique soluble en solution aqueuse, laquelle est mise en contact avec ledit support. Le précurseur de nickel avantageusement utilisé est le nitrate de nickel, le chlorure de nickel, l'acétate de nickel ou le hydroxycarbonate de nickel.

La teneur totale en cobalt et/ou en nickel, exprimée en élément métallique, est avantageusement comprise entre 1 et 20 % poids et de préférence entre 2 et 10 % poids par rapport au poids du support final.

Le séchage est avantageusement effectué à une température comprise entre 60°C et 200°C, de préférence pendant une durée allant de 30 minutes à trois heures.

La calcination est effectuée à une température comprise entre 700 et 1200°C, de préférence comprise entre 850 et 1200°C, et de manière préférée comprise entre 850 et 900°C, généralement pendant une durée comprise entre une heure et 24 heures et de préférence comprise entre 2 heures et 5 heures. La calcination est généralement effectuée sous atmosphère oxydante, par exemple sous air, ou sous air appauvri en oxygène ; elle peut également être effectuée au moins en partie sous azote. Elle permet de transformer les précurseurs de cobalt et/ou de nickel et l'alumine et/ou la silice en phase d'oxyde mixte contenant du cobalt et/ou du nickel.

Selon une variante, la calcination peut également être effectuée en deux étapes, ladite calcination est avantageusement réalisée à une température comprise entre 300°C et 600°C sous air pendant une durée comprise entre une demi-heure et trois heures, puis à une température comprise entre 700°C et 1200°C, de préférence comprise entre 850 et 1200°C et de manière préférée entre 850 et 900°C, généralement pendant une durée comprise entre une heure et 24 heures, et de préférence comprise entre 2 heures et 5 heures.

Ainsi, à l'issue de ladite étape a0), ledit support comprenant de l'alumine, de la silice ou de la silice-alumine comprend en outre une phase d'oxyde mixte contenant du cobalt et/ou du nickel.

### Etape a)

La mise en contact du composé organique employé pour la mise en œuvre de ladite étape a) avec ledit support est réalisée par imprégnation, notamment par imprégnation à sec ou imprégnation en excès, préférentiellement par imprégnation à sec. Ledit composé organique est préférentiellement imprégné sur ledit support après solubilisation en solution, de préférence aqueuse.

On entend ici par un composé organique contenant au moins de l'oxygène et/ou de l'azote un composé ne comportant pas d'autre hétéroatome.

De préférence, ledit composé organique est choisi parmi un composé comportant une ou plusieurs fonctions chimiques choisies parmi une fonction carboxylique, alcool, ester, lactone, amine, amide, éther, dilactone, carboxyanhydride, carbonate, aldéhyde, cétone, nitrile, imide, oxime, urée.

Lorsque ledit composé organique comporte au moins une ou plusieurs fonctions carboxyliques, ledit composé organique peut être choisi parmi l'acide éthanedioïque (acide oxalique), l'acide propanedioïque (acide malonique), l'acide butanedioïque (acide succinique), l'acide 4-oxopentanoïque (acide lévulinique) et l'acide 3-carboxy-3-hydroxypentanedioïque (acide citrique).

Lorsque ledit composé organique comporte au moins une ou plusieurs fonctions alcools, ledit composé organique peut être choisi parmi le méthanol, l'éthanol, le phénol, l'éthylène glycol, le propane-1,3-diol, le glycérol, le sorbitol, le diéthylène glycol, les polyéthylène glycol ayant une masse molaire moyenne inférieure à 600 g/mol, le glucose, le fructose et le sucrose sous l'une quelconque de leurs formes isomères.

Lorsque ledit composé organique comporte au moins une ou plusieurs fonctions esters, ledit composé organique peut être choisi parmi un ester, un diester, une γ-lactone, une δ-lactone ou un carbonate contenant entre 4 et 8 atomes de carbone, la γ-butyrolactone, la γ-valérolactone, le laurate de méthyle, le malonate de diméthyle, le succinate de diméthyle et le carbonate de propylène.

Lorsque le composé organique comporte au moins une ou plusieurs fonction amine, ledit composé organique peut être choisi parmi l'aniline, l'éthylènediamine, le diaminohexane, la tétraméthylènediamine, l'hexaméthylènediamine, la tétraméthyléthylènediamine, la tétraéthyléthylènediamine, la diéthylènetriamine et la triéthylènetétramine.

Lorsque le composé organique comporte au moins une ou plusieurs fonctions amides, ledit composé organique peut être choisi parmi la formamide, la N-méthylformamide, la N,N-diméthylformamide, la 2-pyrrolidone, la N-méthyl-2-pyrrolidone, la gamma-valérolactame et la N,N'-diméthylurée.

Lorsque le composé organique comporte au moins une ou plusieurs fonctions éthers, ledit composé organique peut être choisi parmi les composés organiques comprenant au maximum deux fonctions éthers et ne comportant pas de groupe hydroxyle, choisi dans le groupe des éthers linéaires constitué par le diéthyl éther, le dipropyl éther, le dibutyl éther, le methyl tert-butyl éther, le diisopropyl éther, le di-tert-butyl éther, le méthoxybenzène, le phényl vinyl éther, l'isopropyl vinyl éther et l'isobutyl vinyl éther, ou dans le groupe des éthers cycliques constitué par le tétrahydrofurane, 1,4-dioxane et la morpholine

Lorsque le composé organique comporte une fonction dilactone, ledit composé organique peut être choisi dans le groupe des dilactones cycliques de 4 chaînons constitué par la 1,2-dioxétanedione, ou dans le groupe des dilactones cycliques de 5 chaînons constitué par la 1,3-dioxolane-4,5-dione, la 1,5-dioxolane-2,4-dione, et la 2,2-dibutyl-1,5-dioxolane-2,4-dione, ou dans le groupe des dilactones cycliques de 6 chaînons constitué par la 1,3-dioxane-4,6-dione, la 2,2-diméthyl-1,3-dioxane-4,6-dione, la 2,2,5-triméthyl-1,3-dioxane-4,6-dione, la 1,4-dioxane-2,5-dione, la 3,6-diméthyl-1,4-dioxane-2,5-dione, la 3,6-diisopropyl-1,4-dioxane-2,5-dione, et la 3,3-ditoluyl-6,6-diphényl-1,4-dioxane-2,5-dione, ou dans le groupe des dilactones cycliques de 7 chaînons constitué par la 1,2-dioxépane-3,7-dione, la 1,4-dioxépane-5,7-dione, la 1,3-dioxépane-4,7-dione et la 5-hydroxy-2,2-diméthyl-1,3-dioxépane-4,7-dione.

Lorsque le composé organique comporte une fonction carboxyanhydride, ledit composé organique peut être choisi dans le groupe des O-carboxyanhydrides constitué par la 5-méthyl-1,3-dioxolane-2,4-dione et l'acide 2,5-dioxo-1,3-dioxolane-4-propanoïque, ou dans le groupe des N-carboxyanhydrides constitué par la 2,5-oxazolidinedione et la 3,4-diméthyl-2,5-oxazolidinedione. On entend par carboxyanhydride un composé organique cyclique comportant une fonction carboxyanhydride, c'est-à-dire un enchaînement -CO-O-CO-X- ou -X-CO-O-CO- au sein du cycle avec -CO- correspondant à une fonction carbonyle et X pouvant être un atome d'oxygène ou d'azote. Pour X = O on parle d'O-carboxyanhydride et quand X = N on parle de *N*-carboxyanhydride.

Le rapport molaire de composé organique introduit lors de l'étape a) par rapport à l'élément métallique du groupe VIII introduit à l'étape b) est avantageusement compris entre 0,01 et 2,0 mol/mol, de préférence compris entre 0,05 et 1,5 mol/mol.

### Etape b)

L'étape b) de mise en contact du support poreux avec au moins une solution contenant au moins un précurseur de la phase active comprenant au moins un métal du groupe VIII, peut être réalisée par toute méthode bien connue de l'Homme du métier. Ladite étape b) est préférentiellement réalisée par imprégnation du support par au moins une solution contenant au moins un précurseur de la phase active comprenant au moins un métal du groupe VIII. En particulier, ladite étape b) peut être réalisée par imprégnation à sec, par imprégnation en excès, ou encore par dépôt - précipitation (tel que décrit dans les brevets US 5,874,381 et US 6,534,436) selon des méthodes bien connues de l'Homme du métier. De manière préférée, ladite étape b) est réalisée par imprégnation à sec, laquelle consiste à mettre en contact le support du catalyseur avec une solution, contenant au moins un précurseur de la phase active comprenant au moins un métal du groupe VIII, dont le volume est égal au volume poreux du support à imprégner. Cette solution contient le précurseur de la phase active à la concentration voulue. La teneur en métal du groupe VIII est avantageusement comprise entre 1 et 60% poids, de préférence entre 5 et 30% poids, et de manière très préférée entre 10 et 30% poids en élément du métal du groupe VIII par rapport au poids total du catalyseur.

Le métal du groupe VIII est mis au contact dudit support par l'intermédiaire de tout précurseur de la phase active comprenant un métal du groupe VIII soluble en phase aqueuse ou en phase organique.

De préférence, le métal du groupe VIII est le cobalt. Lorsqu'il est introduit en solution organique, ledit précurseur de cobalt est par exemple l'acétate de cobalt. De manière préférée, ledit précurseur de cobalt est introduit en solution aqueuse, par exemple sous forme de nitrate, de carbonate, d'acétate, de chlorure, de complexes formés avec les acétylacétonates, ou de tout autre dérivé inorganique soluble en solution aqueuse, laquelle est mise en contact avec ledit support. On utilise avantageusement comme précurseur de cobalt, le nitrate de cobalt ou l'acétate de cobalt.

Le catalyseur peut avantageusement comprendre en outre au moins un élément choisi parmi un élément des groupes VIIIB, IA, IB, IIA, IIB, IIIA, IIIB et/ou VA.

Les éventuels éléments du groupe VIIIB préférés sont le platine, le ruthénium et le rhodium. Les éléments du groupe IA préférés sont le sodium et le potassium. Les éléments du groupe IB préférés sont l'argent et l'or. Les éléments du groupe IIA préférés sont le manganèse et le calcium. L'élément du groupe IIB préféré est le zinc. Les éléments du groupe IIIA préférés sont le bore et l'indium. Les éléments du groupe IIIB préférés sont le lanthane et le cérium. L'élément du groupe VA préféré est le phosphore.

La teneur en élément éventuel des groupes VIIIB, IA, IB, IIA, IIB, IIIA, IIIB et/ou VA est comprise entre 50 ppm et 20 % poids, de préférence entre 100 ppm et 15 % poids, et de manière plus préférée entre 100 ppm et 10 % poids exprimé en élément par rapport au poids total du catalyseur.

Selon une variante, lorsque le catalyseur contient un élément ou plusieurs éléments supplémentaires des groupes VIIIB, IA, IB, IIA, IIB, IIIA, IIIB et/ou VA, ce ou ces éléments peuvent être soit initialement présent sur le support avant la préparation du catalyseur, soit introduit à n'importe quel moment de la préparation et par toutes méthodes connues de l'homme du métier.

### Mises en oeuvre des étapes a) et b)

Le procédé de préparation du catalyseur selon l'invention, notamment les étapes a) et b) comporte plusieurs modes de mises en œuvre. Ils se distinguent notamment par le moment de l'introduction du composé organique qui peut être effectuée soit en même temps que l'imprégnation du précurseur de la phase active comprenant un métal du groupe VIII (co-imprégnation), soit après l'imprégnation du précurseur de la phase active (post-imprégnation), soit avant l'imprégnation du précurseur de la phase active (pré-imprégnation). De plus, on peut combiner les modes de mise en œuvre.

Un premier mode de mise en œuvre consiste à effectuer lesdites étapes a) et b) de façon simultanée de sorte que ledit composé organique et au moins ledit précurseur de la phase active sont co-imprégnés sur ledit support (co-imprégnation). Ledit premier mode de mise en œuvre comprend avantageusement la mise en œuvre d'une ou plusieurs étapes b). En particulier, une ou plusieurs étapes b) précède(nt) et/ou suive(nt) avantageusement ladite étape de co-imprégnation. Ledit premier mode de mise en œuvre peut comprendre plusieurs étapes de co-imprégnation.

Un deuxième mode de mise en œuvre consiste à effectuer ladite étape a) préalablement à ladite étape b) (pré-imprégnation). De manière avantageuse, ladite étape a) est suivie de plusieurs étapes b), de préférence deux étapes b).

Un troisième mode de mise en œuvre consiste à effectuer ladite étape b) préalablement à ladite étape a) (post-imprégnation). Conformément audit troisième mode de mise en œuvre, une ou plusieurs étapes b) de mise en contact du précurseur de la phase active précède(nt) ladite étape a).

De manière préférée on réalise l'étape a) avant l'étape b), ce qui correspond au deuxième mode de mise en œuvre.

Lorsque les étapes a) et b) sont réalisées séparément (post-imprégnation ou pré-imprégnation), une étape de séchage est avantageusement effectuée entre les étapes d'imprégnation. L'étape de séchage intermédiaire est effectuée à une température inférieure à 200°C, avantageusement comprise entre 50 et 180°C, de préférence entre 70 et 150°C, de manière très préférée entre 75 et 130°C et optionnellement une période de maturation a été observée entre l'étape d'imprégnation et l'étape de séchage intermédiaire.

Chacun des trois modes de mises en œuvre décrits ci-dessus peut être effectué de manière indépendante de sorte que le catalyseur selon l'invention est préparé soit selon ledit premier mode de mise en œuvre, soit selon ledit deuxième mode de mise en œuvre soit encore selon ledit troisième mode de mise en œuvre.

Toutefois, il peut être avantageux d'associer ledit premier mode avec ledit deuxième mode ou avec ledit troisième mode : aussi bien le métal du groupe VIII présent dans la phase active que le composé organique sont déposés au moins à deux reprises sur le support du catalyseur, à savoir au moins une fois par co-imprégnation et au moins une fois par imprégnation successive.

Il peut être aussi avantageux de réaliser plusieurs fois l'un ou l'autre des trois modes de mises en œuvre décrits ci-dessus de manière à mettre en contact le composé organique et le précurseur de la phase active comprenant au moins un métal du groupe VIII avec le support à au moins deux reprises, de préférence à deux reprises, dans le même ordre d'enchaînement des étapes a) et b) selon l'un ou l'autre des trois modes de réalisation décrits ci-dessus. Par exemple, pour le second mode de réalisation selon l'invention, dans lequel on réalise l'étape a) avant l'étape b), on peut réaliser le procédé de préparation selon l'ordre des étapes suivants : a0 (optionnelle), a), c), b), d), a), c), b), d).

Avantageusement, après chaque étape d'imprégnation, que ce soit une étape d'imprégnation du précurseur de la phase active ou du composé organique, on peut laisser maturer le support imprégné. La maturation permet à la solution d'imprégnation de se disperser de manière homogène au sein du support. Toute étape de maturation décrite dans la présente invention est avantageusement réalisée à pression atmosphérique, dans une atmosphère saturée en eau et à une température comprise entre 17°C et 50°C, et de préférence à température ambiante. Généralement une durée de maturation comprise entre dix minutes et quarante-huit heures et de préférence comprise entre trente minutes et cinq heures, est suffisante. Des durées plus longues ne sont pas exclues, mais n'apportent pas nécessairement d'amélioration.

Toute solution d'imprégnation décrite dans la présente invention peut comprendre tout solvant polaire connu de l'homme du métier. Ledit solvant polaire utilisé est avantageusement choisi dans le groupe formé par le méthanol, l'éthanol, l'eau, le phénol, le cyclohexanol, pris seuls ou en mélange. Ledit solvant polaire peut également être avantageusement choisi dans le groupe formé par le carbonate de propylène, le DMSO (diméthylsulfoxyde), la N-méthylpyrrolidone (NMP) ou le sulfolane, pris seul ou en mélange. De manière préférée, on utilise un solvant protique polaire. Une liste des solvants polaires usuels ainsi que leur constante diélectrique peut être trouvée dans le livre « Solvents and Solvent Effects in Organic Chemistry » C. Reichardt, Wiley-VCH, 3eme édition, 2003, pages 472-474. De manière très préférée, le solvant utilisé est l'eau ou l'éthanol, et de manière particulièrement préférée, le solvant est l'eau. Dans un mode de réalisation possible, le solvant peut être absent dans la solution d'imprégnation.

### Etape c)

Conformément à l'étape de séchage c) de la mise en œuvre pour la préparation du catalyseur, préparé selon au moins un mode de mise en œuvre décrit ci-dessus, le séchage est réalisé à une température inférieure ou égale à 200°C, avantageusement comprise entre 50°C et 180°C, de préférence entre 70°C et 150°C, de manière très préférée entre 75°C et 130°C. L'étape de séchage est préférentiellement réalisée pendant une durée comprise entre 1 et 4 heures, de préférence sous une atmosphère inerte ou sous une atmosphère contenant de l'oxygène.

L'étape de séchage peut être effectuée par toute technique connue de l'Homme du métier. Elle est avantageusement effectuée à pression atmosphérique ou à pression réduite. De manière préférée, cette étape est réalisée à pression atmosphérique. Elle est avantageusement effectuée en lit traversé en utilisant de l'air ou tout autre gaz chaud. De manière préférée, lorsque le séchage est effectué en lit fixe, le gaz utilisé est soit l'air, soit un gaz inerte comme l'argon ou l'azote. De manière très préférée, le séchage est réalisé en lit traversé en présence d'azote et/ou d'air. De préférence, l'étape de séchage a une durée courte comprise entre 5 minutes et 4 heures, de préférence entre 30 minutes et 4 heures et de manière très préférée entre 1 heure et 3 heures.

Selon une première variante, le séchage est conduit de manière à conserver de préférence au moins 30 % du composé organique comportant introduit lors de l'étape b) du procédé de préparation, de préférence cette quantité est supérieure à 50% et de manière encore plus préférée, supérieure à 70%, calculée sur la base du carbone restant sur le catalyseur.

A l'issue de l'étape de séchage c), on obtient alors un précurseur de catalyseur séché.

### Etape d)

Selon un aspect essentiel du procédé de préparation selon l'invention, à l'issue de l'étape c) de séchage, on effectue une étape de calcination d) à une température supérieure à 200°C et inférieure ou égale à 1100°C, de préférence à une température comprise entre 250°C et 600°C, sous flux de gaz inerte et/ou de gaz oxydant, de préférence sous flux de gaz oxydant (de préférence l'air), étant entendue que la vitesse dudit flux gazeux, définie comme le débit massique dudit flux gazeux par volume de catalyseur par heure, est supérieure à 1 litre par gramme de catalyseur et par heure, et est de préférence compris entre 1,5 et 5 litres par gramme de catalyseur et par heure.

Sans vouloir être lié par une quelconque théorie, la réalisation d'une étape de calcination du précurseur de catalyseur séché en présence d'un flux gazeux à une vitesse relativement élevée permet d'éliminer plus rapidement la chaleur de la réaction exothermique de combustion du composé organique, ce qui présente un effet bénéfique sur la formation de la phase active du catalyseur.

La durée de ce traitement thermique est généralement comprise entre 0,5 heures et 16 heures, de préférence entre 1 heure et 5 heures. Après ce traitement, le métal du groupe VIII de la phase active se trouve ainsi sous forme oxyde et le catalyseur ne contient plus ou très peu de composé organique introduit lors de sa synthèse. Cependant l'introduction du composé organique lors de sa préparation a laissé une empreinte sur le support du catalyseur, se traduisant par une meilleure dispersion de la phase active au sein du catalyseur.

L'étape d) est avantageusement effectuée en lit traversé ou en lit fluidisé, de préférence en lit traversé, en utilisant de l'air en tant que flux gazeux.

Préalablement à son utilisation dans le réacteur catalytique de synthèse Fischer-Tropsch, le catalyseur obtenu à l'issue de l'étape d) subit généralement un traitement réducteur, par exemple sous hydrogène pur ou dilué, à haute température, destiné à activer le catalyseur et à former des particules de métal à l'état zéro valent (sous forme métallique). Ce traitement peut être effectué *in-situ* (dans le même réacteur que celui où est opéré la synthèse Fischer-Tropsch), ou *ex-situ* avant d'être chargé dans le réacteur. La température de ce traitement réducteur est préférentiellement comprise entre 200°C et 500°C et sa durée est généralement comprise entre 2 et 20 heures.

### Catalyseur

Le catalyseur obtenu par le procédé de préparation décrit ci-avant comprend, de préférence est constitué de, une phase active comprenant, de préférence constitué de, au moins un métal du groupe VIII et un support poreux à base d'alumine, de silice, ou de silice-alumine, et éventuellement une phase d'oxyde mixte contenant du cobalt et/ou du nickel.

La teneur en métal du groupe VIII est avantageusement comprise entre 1 et 60% poids, de préférence entre 5 et 30% poids, et de manière très préférée entre 10 et 30% poids en élément du métal du groupe VIII par rapport au poids total du catalyseur.

De manière préférée, le métal du groupe VIII est le cobalt.

La surface spécifique du catalyseur est généralement comprise entre 50 m²/g et 500 m²/g, de préférence entre 80 m²/g et 250 m²/g, de façon plus préférée entre 90 m²/g et 150 m²/g. Le volume poreux dudit catalyseur est généralement compris entre 0,2 ml/g et 1 ml/g, et de préférence compris entre 0,25 ml/g et 0,8 ml/g.

### Support

Le support du catalyseur préparé selon le procédé selon l'invention est à base d'alumine, de silice, ou de silice-alumine, et éventuellement une phase d'oxyde mixte contenant du cobalt et/ou du nickel.

Lorsque que le support est une silice-alumine, la teneur en silice (SiO₂) peut varier de 0,5% poids à 30% poids par rapport au poids du support, de préférence comprise entre 0,6 et 15% poids.

Selon une variante, ledit support poreux contient en outre une phase d'oxyde mixte contenant du cobalt et/ou du nickel. Selon cette variante, la teneur de la phase d'oxyde mixte dans le support est comprise entre 0,1 et 50% poids par rapport au poids du support.

De préférence, la phase d'oxyde mixte comprend un aluminate de formule CoAl₂O₄ ou NiAl₂O₄ dans le cas d'un support à base d'alumine ou de silice-alumine, ou un silicate de formule Co₂SiO₄ ou Ni₂SiO₄ dans le cas d'un support à base de silice ou de silice-alumine. On entend par phase d'oxyde mixte contenant du cobalt et/ou du nickel, une phase dans laquelle des cations de cobalt et/ou du nickel sont combinés avec les ions oxydes O²⁻ du support d'alumine et/ou de silice formant ainsi une phase mixte contenant des aluminates et/ou des silicates contenant du cobalt et/ou du nickel.

La phase d'oxyde mixte peut être sous forme amorphe ou sous forme cristallisée. Lorsque le support est à base d'alumine, la phase d'oxyde mixte peut comprendre un aluminate de formule CoAl₂O₄ ou NiAl₂O₄, sous forme amorphe ou cristallisée, par exemple sous forme spinelle. Lorsque le support est à base de silice, la phase d'oxyde mixte peut comprendre un silicate de formule Co₂SiO₄ ou Ni₂SiO₄ (cobalt- ou nickelorthosilicate), sous forme amorphe ou cristallisée. Lorsque le support est à base de silice-alumine, la phase d'oxyde mixte peut comprendre un aluminate de formule CoAl₂O₄ ou NiAl₂O₄ sous forme amorphe ou cristallisée, par exemple sous forme spinelle, et/ou un silicate de formule Co₂SiO₄ ou Ni₂SiO₄, sous forme amorphe ou cristallisée.

Le cobalt et/ou le nickel contenu dans la phase d'oxyde mixte n'est pas réductible lors de l'activation finale du catalyseur Fischer- Tropsch (réduction). Le cobalt et/ou le nickel contenu dans la phase d'oxyde mixte ne constitue donc pas la phase active du catalyseur.

La présence de phase d'oxyde mixte dans le catalyseur selon l'invention se mesure par réduction en température programmée RTP (ou TPR pour "temperature programmed réduction" selon la terminologie anglo-saxonne) tel que par exemple décrit dans Oil & Gas Science and Technology, Rev. IFP, Vol. 64 (2009), No. 1, pp. 11-12. Selon cette technique, le catalyseur est chauffé sous flux d'un réducteur, par exemple sous flux de dihydrogène. La mesure du dihydrogène consommé en fonction de la température donne des informations quantitatives sur la réductibilité des espèces présentes. La présence d'une phase d'oxyde mixte dans le catalyseur se manifeste ainsi par une consommation de dihydrogène à une température supérieure à environ 800°C.

Dans un mode de réalisation selon l'invention, le support est constitué d'une silice-alumine et d'une phase d'oxyde mixte contenant du cobalt et/ou du nickel, de préférence contenant du cobalt.

La surface spécifique du support est généralement comprise entre 50 m²/g et 500 m²/g, de préférence entre 100 m²/g et 300 m²/g, de façon plus préférée entre 150 m²/g et 250m²/g.

Le volume poreux dudit support est généralement compris entre 0,3 ml/g et 1,2 ml/g, et de préférence compris entre 0,4 ml/g et 1 ml/g.

La distribution poreuse des pores du support poreux peut être de type monomodale, bimodale ou plurimodale. De préférence, elle est de type monomodale. La taille de pores est de l'ordre de 2 à 50 nm, avec une taille moyenne des pores entre 5 et 25 nm, de préférence entre 8 et 20 nm.

Le support peut présenter une morphologie sous forme de billes, d'extrudés (par exemple de forme trilobés ou quadrilobes) ou de pastilles, notamment lorsque ledit catalyseur est mis en œuvre dans un réacteur fonctionnant en lit fixe, ou présenter une morphologie sous forme de poudre de granulométrie variable, notamment lorsque ledit catalyseur est mis en œuvre dans un réacteur de type colonne à bulles. De manière préférée, le support se présente sous la forme de poudre de granulométrie comprise entre 10 et 500 µm.

Le support peut-être fourni par tout moyen connu de l'Homme du métier.

### Procédé Fischer-Tropsch

Un autre objet selon l'invention concerne un procédé de Fischer-Tropsch en présence d'un catalyseur préparé selon le procédé de préparation selon l'invention. Ce procédé de Fischer-Tropsch conduit à la production d'hydrocarbures essentiellement linéaires et saturés C₅⁺ (ayant au moins 5 atomes de carbone par molécule). Les hydrocarbures produits par le procédé de l'invention sont ainsi des hydrocarbures essentiellement paraffiniques, dont la fraction présentant les points d'ébullition les plus élevés peut être convertie avec un rendement élevé en distillats moyens (coupes gasoil et kérosène) par un procédé d'hydroconversion tel que l'hydrocraquage et/ou l'hydroisomérisation catalytique(s).

La charge employée pour la mise en œuvre du procédé de l'invention comprend du gaz de synthèse. Le gaz de synthèse est un mélange comprenant notamment du monoxyde de carbone et d'hydrogène présentant des rapports molaires H₂/CO pouvant varier dans un rapport de 0,5 à 4 en fonction du procédé par lequel il a été obtenu. Le rapport molaire H₂/CO du gaz de synthèse est généralement voisin de 3 lorsque le gaz de synthèse est obtenu à partir du procédé de vaporeformage d'hydrocarbures ou d'alcool. Le rapport molaire H₂/CO du gaz de synthèse est de l'ordre de 1,5 à 2 lorsque le gaz de synthèse est obtenu à partir d'un procédé d'oxydation partielle. Le rapport molaire H₂/CO du gaz de synthèse est généralement voisin de 2,5 lorsqu'il est obtenu à partir d'un procédé de reformage thermique. Le rapport molaire H₂/CO du gaz de synthèse est généralement voisin de 1 lorsqu'il est obtenu à partir d'un procédé de gazéification et de reformage du CO₂.

Le catalyseur utilisé dans le procédé de synthèse d'hydrocarbures selon l'invention est de manière préférée mis en œuvre dans des réacteurs en lit bouillonnant ou encore en lit fluidisé triphasique. La mise en œuvre du catalyseur en suspension dans un réacteur fluidisé triphasique, préférentiellement de type colonne à bulle, est préférée. Dans cette mise en œuvre préférée du catalyseur, ledit catalyseur forme une suspension avec le milieu réactionnel. Cette technologie est également connue sous la terminologie de procédé "slurry" par l'homme du métier.

Le procédé de synthèse d'hydrocarbures selon l'invention est opéré sous une pression totale comprise entre 0,1 MPa et 15 MPa, de préférence entre 0,5 MPa et 10 MPa, sous une température comprise entre 150°C et 350°C, de préférence entre 180°C et 270°C. La vitesse volumique horaire est avantageusement comprise entre 100 et 20000 volumes de gaz de synthèse par volume de catalyseur et par heure (100 à 20000 h⁻¹) et de préférence entre 400 et 10000 volumes de gaz de synthèse par volume de catalyseur et par heure (400 à 10000 h⁻¹).

Pour illustrer l'invention et pour permettre à l'Homme du métier de l'exécuter, nous présentons ci-après différents modes de réalisation du procédé de préparation de catalyseurs supportés à base de cobalt et leur utilisation en synthèse Fischer-Tropsch ; cependant cela ne saurait limiter la portée de l'invention.

### Exemples

### Exemple 1 (comparatif) : Catalyseur A de formule Co / CoAl₂O₄-Al₂O₃.SiO₂ contenant de la γ-valérolactone et calciné avec une vitesse d'air de 0,7 litres d'air par gramme de catalyseur et par heure

Le spinelle présente dans le support du catalyseur A est un spinelle simple formé d'aluminate de cobalt, lequel est inclus dans une silice-alumine contenant 5% poids de SiO₂, de granulométrie moyenne égale à 80 µm, et présentant une surface spécifique de 180 m²/g et un volume poreux de 0,55 ml/g. La préparation du spinelle inclus dans la silice-alumine est effectuée par imprégnation à sec d'une solution aqueuse de nitrate de cobalt (Orrion Chemicals Metalchem, -13% pds Co) de manière à introduire 5% poids de cobalt dans ladite silice-alumine. Après séchage à 120°C pendant 3 heures, le solide est calciné à 850°C pendant 4 heures sous air. Le support du catalyseur A est formé de 5% poids de cobalt sous forme d'aluminate de cobalt dans la silice-alumine.

La γ-valérolactone est déposée sur le support décrit ci-dessus par imprégnation à sec d'une solution de γ-valérolactone, à une concentration telle que le ratio molaire γ-valérolactone / Co soit de 1,0 mol/mol. Après l'imprégnation à sec, le solide subit une maturation en atmosphère saturée en eau pendant 9 heures à température ambiante, puis est séché en étuve à 120°C pendant 3 heures. La phase active à base de cobalt est déposée ensuite sur le solide séché par imprégnation à sec d'une solution contenant du nitrate de cobalt dans un ratio molaire γ-valérolactone/Co de 1,0 mol/mol. Après l'étape d'imprégnation à sec du cobalt sur le support, le solide subit une maturation en atmosphère saturée en eau pendant 9 heures à température ambiante, puis est séché en lit traversé à 120°C pendant 3 heures sous air. Le solide séché est ensuite calciné sous air à 400°C pendant 4 heures en lit traversé avec une vitesse d'air de 0,7 litre d'air/gramme de catalyseur et par heure (l/g.h).

Les étapes précédentes (imprégnation de la γ-valérolactone, maturation, séchage, imprégnation de la phase active à base de cobalt, maturation, séchage puis calcination) sont réalisées chacune une deuxième fois dans le même ordre afin d'obtenir un catalyseur A final présentant une teneur totale en cobalt de 20% poids (la teneur en Co présent dans la phase spinelle étant comprise), soit 15% poids de cobalt en tant que phase active.

### Exemple 2 (selon l'invention) : Catalyseur B de formule Co / CoAl₂O₄-Al₂O₃.SiO₂ contenant de la γ-valérolactone et calciné avec une vitesse d'air de 2 litres d'air par gramme de catalyseur et par heure

Le catalyseur B est préparé en utilisant le même support que celui utilisé pour le catalyseur A, et en réalisant les mêmes étapes que celles effectuées pour obtenir le catalyseur A, à la seule différence que l'étape de calcination est réalisée sous air à 400°C pendant 4 heures en lit traversé avec une vitesse d'air de 2 litres d'air/gramme de catalyseur et par heure (l/g.h).

Le catalyseur B final présente une teneur totale en cobalt de 20% poids (la teneur en Co présent dans la phase spinelle étant comprise), soit 15% poids de cobalt en tant que phase active.

### Exemple 3 (selon l'invention) : Catalyseur C de formule Co / CoAl₂O₄-Al₂O₃.SiO₂ contenant de la γ-valérolactone et calciné avec une vitesse d'air de 3 litres d'air par gramme de catalyseur et par heure

Le catalyseur C est préparé en utilisant le même support que celui utilisé pour le catalyseur A, et en réalisant les mêmes étapes que celles effectuées pour obtenir le catalyseur A, à la seule différence que l'étape de calcination est réalisée sous air à 400°C pendant 4 heures en lit traversé avec une vitesse d'air de 3 litres d'air/gramme de catalyseur et par heure (l/g.h).

Le catalyseur C final présente une teneur totale en cobalt de 20% poids (la teneur en Co présent dans la phase spinelle étant comprise), soit 15% poids de cobalt en tant que phase active.

### Exemple 4 (selon l'invention) : Catalyseur D de formule Co / CoAl₂O₄-Al₂O₃.SiO₂ contenant de la γ-valérolactone et calciné avec une vitesse d'air de 4 litres d'air par gramme de catalyseur et par heure

Le catalyseur D est préparé en utilisant le même support que celui utilisé pour le catalyseur A, et en réalisant les mêmes étapes que celles effectuées pour obtenir le catalyseur A, à la seule différence que l'étape de calcination est réalisée sous air à 400°C pendant 4 heures en lit traversé avec une vitesse d'air de 4 litres d'air/gramme de catalyseur et par heure (l/g.h).

Le catalyseur D final présente une teneur totale en cobalt de 20% poids (la teneur en Co présent dans la phase spinelle étant comprise), soit 15% poids de cobalt en tant que phase active.

### Exemple 5 : Performances catalytiques des catalyseurs A à D en réaction Fischer-Tropsch

Les catalyseurs A à D, avant d'être successivement testés en conversion du gaz de synthèse, sont réduits ex situ sous un flux d'hydrogène pur à 400°C pendant 16 heures en réacteur tubulaire. Une fois le catalyseur réduit, il est déchargé sous atmosphère d'argon et enrobé dans de la cire Sasolwax^{®} pour être stocké à l'abri de l'air avant test. La réaction de synthèse Fischer-Tropsch est opérée dans un réacteur triphasique (aussi appelé technologie "slurry" selon la terminologie anglaise) fonctionnant en continu et opérant avec une concentration de 10% (vol) de catalyseur en phase dispersée. Les conditions de test sont les suivantes : température = 220°C ; pression totale = 2 MPa ; rapport molaire H₂/CO=2. La conversion du CO est maintenue à 60% pendant toute la durée du test. Les conditions de test sont ajustées de façon à être à iso conversion de CO quelle que soit l'activité du catalyseur. Les résultats, en termes d'activité, ont été calculés après 150 heures de test pour les catalyseurs A à D par rapport au catalyseur A servant de référence et figurent dans le tableau 1 ci-après. Les sélectivités en formation de méthane sont également données.

**Tableau 1 : Performances catalytiques des catalyseurs A à D**

| Catalyseurs | Vitesse de l'air de calcination (litres air/gramme catalyseur/h) | Activité relative après 150 heures de test | Sélectivité de formation du méthane (%) |
|---|---|---|---|
| A (non conforme) | 0,7 | 100 (base) | 7,0 |
| B (conforme) | 2,0 | 120 | 6,6 |
| C (conforme) | 3,0 | 125 | 6,7 |
| D (conforme) | 4,0 | 130 | 6,5 |

Les résultats du tableau 1 ci-avant montrent les performances catalytiques des catalyseurs A à D tant en termes d'activité et de sélectivité. Il apparaît que les catalyseurs préparés par le procédé selon l'invention avec une vitesse d'air lors de l'étape de calcination supérieure à 1 litre air/gramme catalyseur et par heure présentent après 150 heures de test des activités relatives améliorées par rapport au catalyseur A de l'exemple 1 dont la vitesse d'air lors de l'étape de calcination est inférieure à 1 litre air/gramme catalyseur et par heure.

## Revendications

1. Procédé de préparation d'un catalyseur contenant une phase active à base d'au moins un métal du groupe VIII et un support poreux à base d'alumine, de silice, ou de silice-alumine, ledit catalyseur étant préparé par au moins les étapes suivantes :
a) on met en contact ledit support avec au moins un composé organique comportant au moins de l'oxygène et/ou de l'azote ;
b) on met en contact ledit support poreux avec au moins une solution contenant au moins un précurseur de la phase active comprenant au moins un métal du groupe VIII, les étapes a) et b) pouvant être réalisées séparément, dans un ordre indifférent, ou simultanément,
c) on sèche le précurseur de catalyseur obtenu à l'issue de l'enchaînement des étapes a) et b) à une température inférieure ou égale à 200°C pour obtenir un précurseur de catalyseur séché ;
d) on calcine le précurseur de catalyseur séché obtenu à l'issue de l'étape c) à une température supérieure à 200°C et inférieure ou égale à 1100°C sous flux de gaz inerte et/ou de gaz oxydant, étant entendue que la vitesse dudit flux gazeux, définie comme le débit massique dudit flux gazeux par volume de catalyseur par heure, est supérieure à 1 litre par gramme de catalyseur et par heure.

2. Procédé selon la revendication 1, dans lequel à l'étape d) la vitesse du flux gazeux est compris entre 1,5 et 5 litres par gramme de catalyseur et par heure.

3. Procédé selon l'une des revendications 1 ou 2, dans lequel l'étape a) est réalisée avant l'étape b).

4. Procédé selon l'une quelconque des revendications 1 à 3, dans lequel ledit composé organique est choisi parmi un composé comportant une ou plusieurs fonctions chimiques choisies parmi une fonction carboxylique, alcool, ester, amine, amide, éther, dilactone, carboxyanhydride, aldéhyde, cétone, nitrile, imide, oxime, urée.

5. Procédé selon la revendication 4, dans lequel ledit composé organique comporte au moins une fonction carboxylique choisi parmi l'acide éthanedioïque (acide oxalique), l'acide propanedioïque (acide malonique), l'acide butanedioïque (acide succinique), l'acide 4-oxopentanoïque (acide lévulinique) et l'acide 3-carboxy-3-hydroxypentanedioïque (acide citrique).

6. Procédé selon la revendication 4, dans lequel ledit composé organique comporte au moins une fonction alcool choisi parmi le méthanol, l'éthanol, le phénol, l'éthylène glycol, le propane-1,3-diol, le glycérol, le sorbitol, le diéthylène glycol, les polyéthylène glycol ayant une masse molaire moyenne inférieure à 600 g/mol, le glucose, le fructose et le sucrose sous l'une quelconque de leurs formes isomères.

7. Procédé selon la revendication 4, dans lequel ledit composé organique comporte au moins une fonction ester choisi parmi une γ-lactone ou une δ-lactone contenant entre 4 et 8 atomes de carbone, la γ-butyrolactone, la γ-valérolactone, le laurate de méthyle, le malonate de diméthyle, le succinate de diméthyle et le carbonate de propylène.

8. Procédé selon la revendication 4, dans lequel ledit composé organique comporte au moins une fonction amine choisi parmi l'aniline, l'éthylènediamine, le diaminohexane, la tétraméthylènediamine, l'hexaméthylènediamine, la tétraméthyléthylènediamine, la tétraéthyléthylènediamine, la diéthylènetriamine et la triéthylènetétramine.

9. Procédé selon la revendication 4, dans lequel ledit composé organique comporte au moins une fonction amide choisi parmi la formamide, la N-méthylformamide, la N,N-diméthylformamide, la 2-pyrrolidone, la N-méthyl-2-pyrrolidone, la gamma-valérolactame et la N,N'-diméthylurée.

10. Procédé selon la revendication 4, dans lequel ledit composé organique comporte au moins une fonction carboxyanhydride choisi dans le groupe des O-carboxyanhydrides constitué par la 5-méthyl-1,3-dioxolane-2,4-dione et l'acide 2,5-dioxo-1,3-dioxolane-4-propanoïque, ou dans le groupe des N-carboxyanhydrides constitué par la 2,5-oxazolidinedione et la 3,4-diméthyl-2,5-oxazolidinedione.

11. Procédé selon la revendication 4, dans lequel ledit composé organique comporte au moins une fonction dilactone choisi dans le groupe des dilactones cycliques de 4 chaînons constitué par la 1,2-dioxétanedione, ou dans le groupe des dilactones cycliques de 5 chaînons constitué par la 1,3-dioxolane-4,5-dione, la 1,5-dioxolane-2,4-dione, et la 2,2-dibutyl-1,5-dioxolane-2,4-dione, ou dans le groupe des dilactones cycliques de 6 chaînons constitué par la 1,3-dioxane-4,6-dione, la 2,2-diméthyl-1,3-dioxane-4,6-dione, la 2,2,5-triméthyl-1,3-dioxane-4,6-dione, la 1,4-dioxane-2,5-dione, la 3,6-diméthyl-1,4-dioxane-2,5-dione, la 3,6-diisopropyl-1,4-dioxane-2,5-dione, et la 3,3-ditoluyl-6,6-diphényl-1,4-dioxane-2,5-dione, ou dans le groupe des dilactones cycliques de 7 chaînons constitué par la 1,2-dioxépane-3,7-dione, la 1,4-dioxépane-5,7-dione, la 1,3-dioxépane-4,7-dione et la 5-hydroxy-2,2-diméthyl-1,3-dioxépane-4,7-dione.

12. Procédé selon la revendication 4, dans lequel ledit composé organique comporte au moins une fonction éther comportant au maximum deux fonctions éthers, et ne comportant pas de groupe hydroxyle, choisi dans le groupe des éthers linéaires constitué par le diéthyl éther, le dipropyl éther, le dibutyl éther, le methyl tert-butyl éther, le diisopropyl éther, le di-tert-butyl éther, le méthoxybenzène, le phényl vinyl éther, l'isopropyl vinyl éther et l'isobutyl vinyl éther, ou dans le groupe des éthers cycliques constitué par le tétrahydrofurane, 1,4-dioxane et la morpholine.

13. Procédé selon l'une quelconque des revendications 1 à 12, dans lequel le rapport molaire du composé organique introduit lors de l'étape a) par rapport à l'élément de métal du groupe VIII introduit à l'étape b) est compris entre 0,01 et 2,0 mol/mol.

14. Procédé selon l'une quelconque des revendications 1 à 13, dans lequel la teneur en métal du groupe VIII introduit lors de l'étape b) est comprise entre 1 et 60 % poids exprimé en élément métallique du groupe VIII par rapport au poids total du catalyseur.

15. Procédé Fischer-Tropsch de synthèse d'hydrocarbures comprenant la mise en contact d'une charge comprenant du gaz de synthèse avec au moins un catalyseur obtenu par le procédé selon l'une quelconque des revendications 1 à 14 sous une pression totale comprise entre 0,1 et 15 MPa, sous une température comprise entre 150°C et 350°C, et à une vitesse volumique horaire comprise entre 100 et 20000 volumes de gaz de synthèse par volume de catalyseur et par heure avec un rapport molaire H₂/CO du gaz de synthèse entre 0,5 et 4.
